Europäisches Patentamt

European Patent Office

Office européen des brevets

(11) Publication number: **0 155 148**
A1

# EUROPEAN PATENT APPLICATION

(21) Application number: **85301596.4**

(22) Date of filing: **07.03.85**

(51) Int. Cl.⁴: **F 16 L 59/08, G 21 C 11/08**

(30) Priority: **12.03.84 US 587759**

(71) Applicant: **THE BABCOCK & WILCOX COMPANY, 1010 Common Street P.O. Box 60035, New Orleans Louisiana 70160 (US)**

(43) Date of publication of application: **18.09.85 Bulletin 85/38**

(72) Inventor: **Elliott, Patrick Harlan, 728 East Chestnut Street, Lancaster Ohio 43130 (US)**
Inventor: **Funk, James Lee, 127 South Ohio Avenue, Lancaster Ohio 43130 (US)**

(84) Designated Contracting States: **DE FR GB IT NL SE**

(74) Representative: **Cotter, Ivan John et al, D. YOUNG & CO. 10 Staple Inn, London WC1V 7RD (GB)**

(54) **Size-adjustable construction elements.**

(57) A size-adjustable construction element uses channel spacers (30) to maintain spaced parallel relationship and positive physical contact between adjacent panel members (19, 21). The construction element may be in the form of a multilayered mirror insulation that has an adjustement section (20) to permit use of a standard size component to fit non-standard dimensions and that includes channel spacers (30) that effectively reduce convection between adjacent layers or sheets (16), provide positive structural support, provide a bearing surface for ease of adjustement and maintain the parallel space relationship between adjacent sheets (16).

EP 0 155 148 A1

1

## SIZE-ADJUSTABLE CONSTRUCTION ELEMENTS

This invention relates to size-adjustable construction elements, for example multilayered panels. The invention is particularly (but not exclusively) applicable to mirror thermal insulation.

The use of bright, highly reflective metallic sheets to provide thermal insulation for industrial equipment is known. The high reflectivity of aluminium or stainless steel sheets typically used for this insulation reduces radiation of heat from heat sources, such as pipes, panels and the like.

Mirror insulation normally comprises a plurality of parallel spaced layers, which reduces heat loss through convection and reduces the total amount of heat radiated from the entire assembly. It is important to reduce the size and number of gaps in the total insulation package to minimise convective heat loss.

Mirror pipe insulation is commonly used in the nuclear power industry, where it may be subjected to a radioactive environment. In such an environment it offers substantial benefits over convectional thermal insulation, which comprises blocks of refractory material or low conductivity masses of fibrous material such as glass fibres, mineral wool, etc., because multilayered mirror insulation is much stronger and the open structure of the insulation permits easy cleaning of its interior. These advantages, coupled with efficient insulating properties, have led to enthusiastic commercial acceptance of reflective mirror insulation, particularly in the nuclear power industry.

Commercial use of such insulation, however, has created serious problems of fabrication and installation, resulting from the very structure of the insulation itself. Fibrous or ceramic insulations are generally cut to fit pipes or other objects to be insulated on the job site with simple tools such as portable saws. The complex metallic structure of multilayer mirror insulation, in contrast, virtually requires that it be fabricated in a sheet metal shop, where tolerances and quality can be controlled more closely, and then transported to the job site for installation. Naturally, production efficiency is higher when such insulation is manufactured in standard sized units. Sometimes, however, reflective mirror insulation is custom designed and built from construction drawings of the objects to be insulated supplied by the builder. Even then, however, the insulation units may not fit exactly because the field structures do not conform exactly to the engineering drawings. In either case, a unit of reflective mirror insulation must be completely built especially for the nonstandard dimension required, or modified prior to installation.

It has been suggested that this problem of misfitting parts could be resolved by working directly from dimensions taken in the field. Taking such dimensions is, however, extremely time consuming, and it substantially delays completion of construction projects because fabrication of reflective mirror insulation according to this method cannot begin until the structure to be insulated is complete.

The problem also hinders attempts to design and manufacture standard sizes of insulation. At least some sections of insulation must be individually tailored to a particular size, placing reflective insulation at a disadvantage compared to ceramic or fibrous insulations that can be stockpiled and readily cut to size on the job site. Consequently, it would be of considerable benefit to provide a reflective mirror insulation whose size can be adjusted.

One effort in this direction is described in US Patent No. US-A-3 892 261 (Hoeman), which discloses a multilayered reflective mirror insulation for a pipe. The length of the insulation is expandable. Expansion is achieved by pulling each end of the insulation sheet. Each layer of insulation includes an adjustable mid-section comprising a splice piece set composed of two spaced parallel metal sheets fixed to one layer to form a female extension member. The corresponding abutting layer from the other end of the adjustable section slips between the two layers of the splice piece set, forming a sandwich. The sandwich construction was designed to reduce convection around the joints formed where the respective layers abut and to increase the rigidity and strength of the structure. Only the frictional engagement of these layers and splice piece sets holds the layers in their proper parallel spaced relationship throughout the length of the adjustment. Adjustable mirror insulation units according to US-A-3 892 261 were built, but were employed sparingly because manufacture of the unit is extremely labour intensive and expensive since it calls for many welds and very close tolerances. In addition, convective heat loss through the joints was much greater than anticipated or acceptable because mere frictional engagement in the multilayered sections was not sufficient to maintain proper spacing between adjacent layers and maintain a relatively air-tight seal at the interface of a layer and a mating splice piece set. Maintaining proper alignment of these joints when the insulation is rolled to enclose a pipe is exceedingly difficult.

A significantly later attempt to address these problems is described in US Patent No. US-A-3 904 379 (Oser), which likewise discloses an adjustable multilayered mirror pipe insulation. In US-A-3 904 379, each layer is kept in its proper parallel spaced relationship to the others by cone-shaped projections or stand-offs. In the adjustment portion, however, only the frictional engagement of abutting overlapping layers and the inherent rigidity of each layer maintains the proper spaced relationship, as well as the frictional engagement of the overlapping layers. A plurality of bolts penetrates all layers of insulation in the adjustment section to secure the insulation in its adjusted position after installation. To permit pull-apart adjustment with the bolt in place, and to prevent pulling the insulation completely apart, each layer includes a longitudinal slot. Although US-A-3 904 379 discloses a simpler structure than US-A-3 892 261, US-A-3 904 379 suffers from similar difficulties. The bolts that penetrate all layers of the insulation conduct much heat from the heat source by providing a direct path from the heat source to the ambient air. Slots throughout the length of permitted adjustment invite large convective heat losses. Similarly, the direct contact between overlapping insulation layers is only maintained by the rigidity of the layers themselves. In installation and operation they are extremely likely not to retain the neat precisely aligned arrays illustrated in the drawings, but to separate moderately, permitting further convective heat loss. The largest single disadvantage of such adjustable mirror insulation is the extraordinarily high heat loss in the adjustment section. US-A-3 904 379 suffers more from this defect than other prior art solutions to these difficulties.

Furthermore, in these prior art approaches, the insulation could only be expanded. Only with great difficulty and resultant substantial reduction in insulating properties could the insulation be contracted. Thus, if workers expanded a unit of adjustable insulation too much to fit in a given application, it could quite likely be ruined and require complete replacement.

Accordingly, there is a need for an improved size-adjustable construction element, desirably (but not essentially) of multilayered form, and desirably (but not essentially) in the form of a mirror insulation unit, that can be expanded or contracted to enable its size to be adjusted.

According to one broad aspect of the invention there is provided a size-adjustable construction element including an adjustable section comprising:

(a)    a first panel member;

(b)    a second panel member overlapping the first panel member;

(c)    a first plurality of channel spacers attached to the first panel member on one surface thereof;

(d)    a second plurality of channel spacers attached to the second panel member on a surface thereof that is opposed to the surface to which the first channel spacers are attached; and

(e)    means for retaining the panel members in fixed relation to each other after adjusting the size of the element.

According to another broad aspect of the invention there is provided a size-adjustable multilayered panel comprising:

(a)    a first section having a plurality of spaced parallel sheets;

(b)    a second section having a plurality of spaced parallel sheets;

(c)    an adjustment section wherein corresponding layers of the first section and the second section overlap, the adjustment section being adjustable in one direction; and

(d)    a plurality of channel spacers attached to each sheet to maintain parallel spaced relationship between the sheets and to provide a bearing surface for smooth adjustment of the panel, and aligned so that the channel spacers of each section fit between channel spacers of the other section.

Preferred embodiments of the present invention, described in detail hereinbelow, provide an adjustable mirror insulation unit that has the following advantageous features.

(i)    It can be adjusted by expansion or contraction to permit use of a standard component to fit a non-standard dimension.

(ii)    Not only can it be expanded or contracted, but it is less labour intensive to manufacture, thermally insulates better, and withstands mishandling during shipment and installation better than the prior art.

(iii)   It can be expanded or contracted within a given adjustment range.

(iv)    It can be adjusted more than once.

(v)     Its insulating properties approach those of non-adjustable mirror insulation more closely.

(vi)    It is simpler to build and less costly than comparable units of the prior art.

(vii)   It can be readily installed and adjusted in the field with a minimum of skilled labour.

The preferred embodiments, which are in the form of multilayered mirror insulation units, are described in detail hereinbelow with reference to the accompanying drawings. Firsty, however, the preferred units will be described in outline.

Each section of the adjustable mirror insulation unit includes an inner plate or case, adjacent the body to be insulated, and an outer plate or case defining the outer boundary of the adjustable mirror insulation unit. A plurality of spaced parallel reflective sheets is disposed between the inner plate and the outer plate. The reflective sheets are typically made from polished aluminium or stainless steel sheets. Typically, the reflective sheets are of uniform thickness ranging from about 0.025 mm (0.001 inches) to 0.152 mm (0.006 inches), with thicknesses of about 0.051 mm (0.002) inches or about 0.102 mm (0.004 inches) being preferred.  The inner case and outer case are generally thicker to provide greater structural rigidity and in general to protect the thinner sheets between them. The thickness of the inner case, for example, usually ranges from about 0.381 mm (0.015 inches) to about 6.35 mm (0.25 inches), with about 4.83 mm (0.19 inches) being a preferred thickness. The outer case is thicker yet, since it is exposed to greater risk of damage. The thickness of the outer case typically falls within a range from about 6.35 mm (0.25 inches) to about 11.43 mm (0.45 inches), with a thickness of about 8.13 mm (0.32 inches) being preferred. Although the adjustable mirror insulation unit may include as many sheets as desired, typically the number of sheets varies from about five to about ten, with about six sheets being a preferred number in many applications.

It is important that these multiple layers or sheets be kept in their proper spaced parallel relationship to each other to minimise heat loss. The spacing between sheets, including the outer and inner cases, is maintained by a plurality of spacers, which may be attached to each sheet. U.S. Patent No. US-A-3 904 379 (Oser) discloses one method of keeping the layers parallel. A simple method, which may be used in embodiments of the present invention, is disclosed in US Patent No. US-A-4 054 158 (Hoeman), in which strips of corrugated foil are spot welded to one surface of each sheet. A preferred spacer means for use in embodiments of the present invention comprises a corrugated foil strip mounted on its edge and fastened to one side of each sheet, as disclosed in US Patent No. US-A-4 221 094 (Murdock). The spacer of US-A-4 221 094 permits sheets of insulation to be bent into the desired shape easily.

Adjustment is achieved in the preferred embodiments of the present invention by overlapping of the ends of corresponding layers. The adjustment portion (adjustable section) of the unit may conveniently be located near the midsection of the unit, although other relative locations may be used instead. Spacers according to the prior art cannot be used to maintain proper spacing between the adjacent sheets in the adjustment portion because such spacers gouge into the layers, causing distortions of the metal, improper adjustment, improper alignment of adjacent layers relative to one another, punctures and tears. Consequently, none of the prior art described above includes spacers of any type in the adjustment portion of the mirror insulation unit. The preferred embodiments of the present invention overcome this difficulty by providing a plurality of channel spacers between adjacent layers of insulation. The channel spacer is as long as the adjustment portion of the adjustable mirror insulation unit and lies along the direction of adjustment. The channel spacers also provide an effective seal against convection between adjacent layers, maintain the appropriate and correct spacing between adjacent layers, and perhaps most importantly maintain frictional engagement between the overlapping portions of different layers, dramatically reducing convection losses generated in solutions according to the prior art.

Naturally, the amount of adjustment available is a matter of choice and convenience, but typically an adjustment of 305 mm (one foot) has been found satisfactory for many applications.

The invention will now be further described, by way of illustrative and non-limiting example, with reference to the accompanying drawings, in which:

Figure 1 is a sectional elevation of an adjustable mirror insulation unit embodying the present invention for insulating a pipe;

Figure 2 is an enlarged sectional elevation of an adjustment portion of the adjustable mirror insulation unit of Figure 1, showing a sliding relationship of layers thereof relative to one another;

Figure 3 is a sectional elevation taken along line 3-3 of Figure 1, showing alignment of channel V-spacers of the adjustment portion;

Figure 4 is a sectional elevation taken along line 4-4 of Figure 1, showing alignment of corrugated foil spacer strips that maintain spacing in a non-adjustable portion of the insulation unit;

Figure 5 is an elevation, partially in section, of the adjustable mirror insulation unit of Figure 1, illustrating adjustment restraining means that maintains alignment of respective layers and prevents the unit being pulled apart;

Figure 6 is an end elevation, partially in section, of the adjustable mirror insulation unit of Figure 1, illustrating an end cap for sealing the ends of the mirror insulation unit on a pipe;

Figure 7 is a plan view of the adjustment portion of an adjustable mirror insulation unit embodying the present invention, illustrating the unit in its fully contracted state;

Figure 8 is a plan view, partially in section, of the structure of Figure 7, shown in its fully expanded state;

Figure 9 is a sectional view taken along line 9-9 of Figure 8 showing overlapping adjustment portions of two flat panels with channel V-spacers; and

Figure 10 is a sectional side elevation of the adjustment portion of a flat panel mirror insulation unit embodying the present invention.

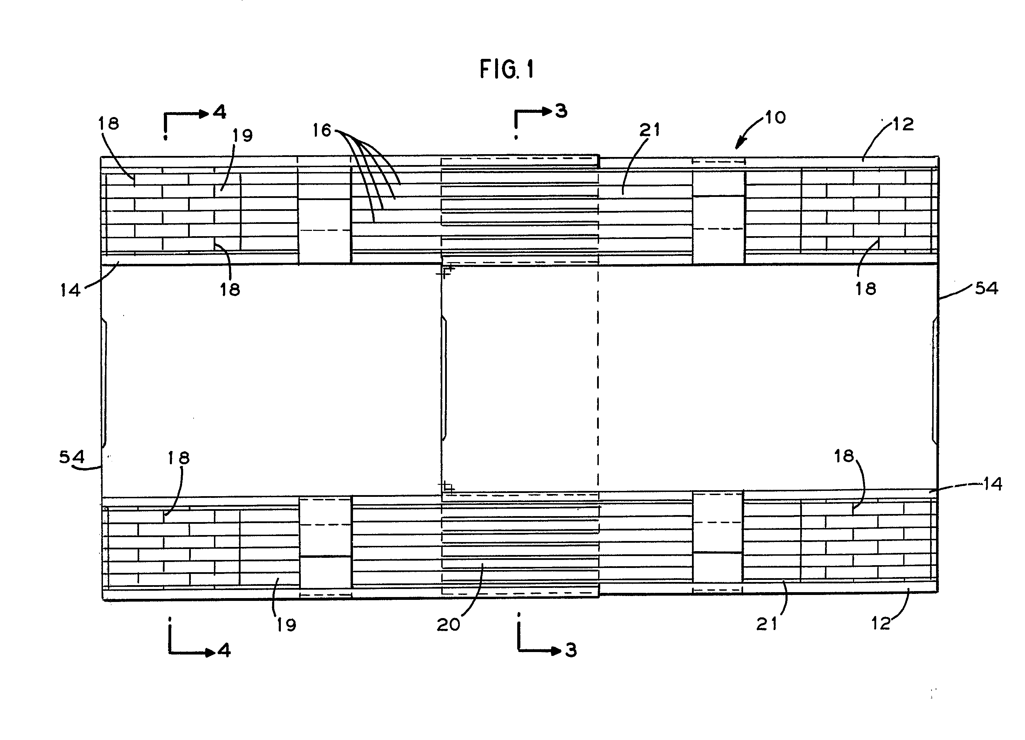

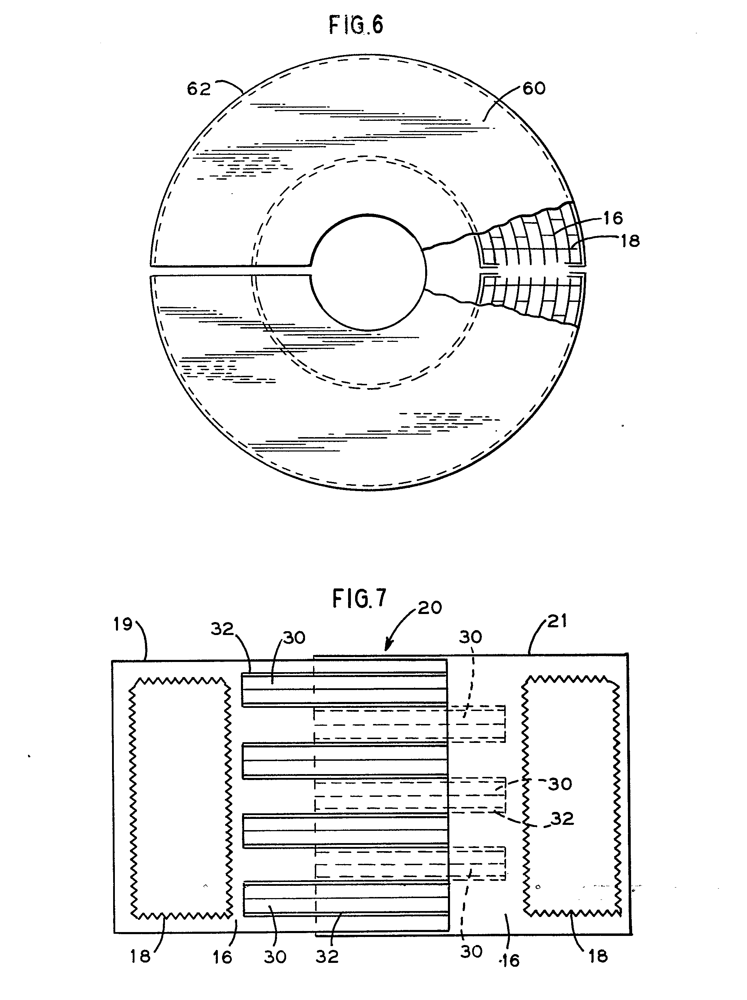

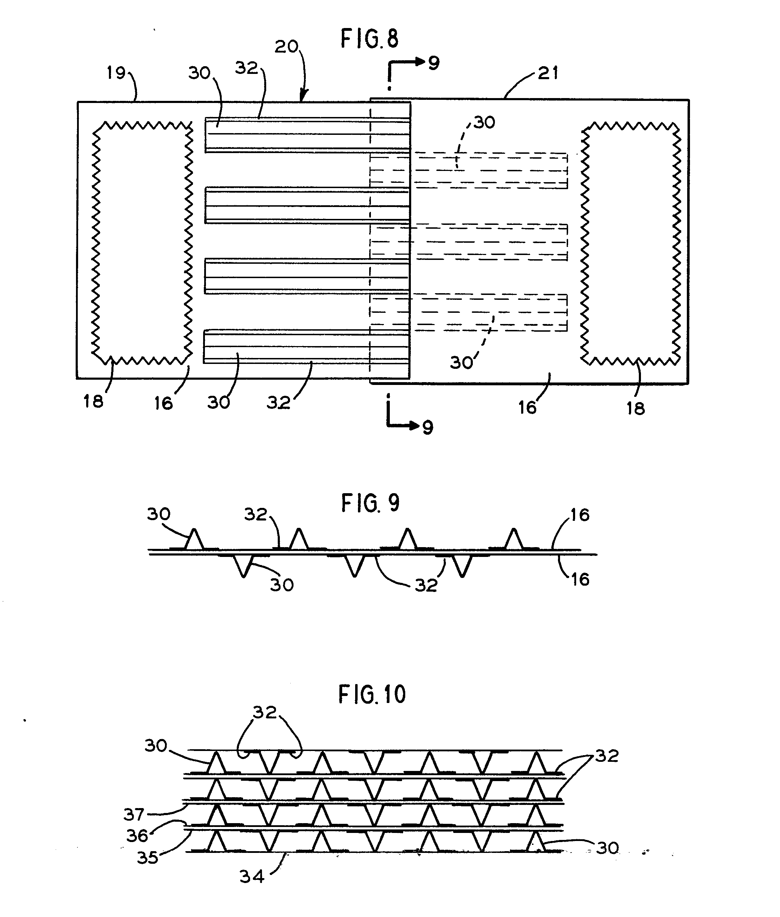

Figure 1 shows an adjustable mirror insulation unit 10 designed for insulating a pipe, the unit 10 having an outer case 12, an inner case 14 and a plurality of reflective sheets 16. The sheets 16 may be present in any desired number, the number being six in the embodiment illustrated, thereby making up a total of eight layers of insulating material in the adjustable mirror insulation unit 10. Spacers are disposed between adjacent layers of insulating material to maintain the spaced parallel relationship between adjacent layers, to increase structural rigidity, and to reduce convection heat losses. Preferably, these spacers are corrugated foil strips 18 as disclosed in US-A-4 221 094 (Murdock) mentioned above. The corrugated foil strips 18 are mounted on their edge on a surface of each reflective sheet 16 so that, as viewed in Figure 1, only the vertical line formed by the corrugation bend in the corrugated foil strip 18 is visible. Preferably, one corrugated foil strip 18 is disposed in a rectangular pattern on one surface of each reflective sheet 16, as illustrated in Figures 7 and 8. Such spacers cannot be used in an adjustment portion or section 20 of the adjustable mirror insulation unit 10.

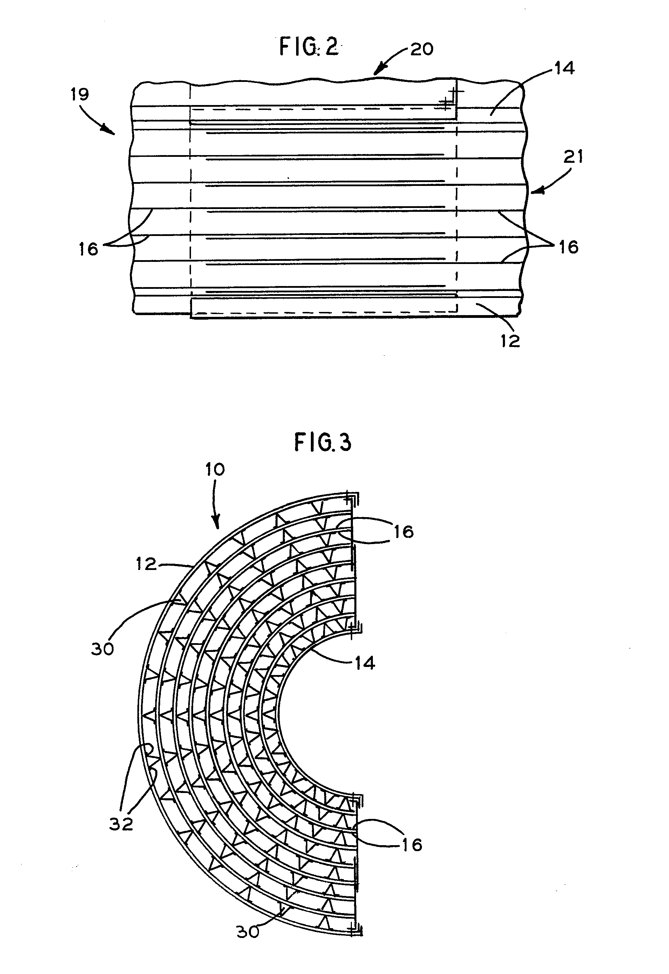

Figure 2 illustrates overlapping sliding engagement of the ends of the reflective sheets 16, outer case 12 and inner case 14 in the adjustment portion 20 of the adjustable mirror insulation unit 10 illustrated in Figure 1 designed for insulating a pipe. Adjustment is accomplished by constructing the adjustable mirror insulation unit 10 in a first section 19 and a second section 21 which are jointed at a section intermediate their two ends, as illustrated in Figure 2. The adjustment portion 20 may conveniently be located at about the midpoint of the adjustable mirror insulation unit 10, but may be located at any other convenient point. Each respective layer of the first section 19 rests on the top surface of the corresponding layer of the second section 21 in sliding engagement therewith, permitting adjustment of the adjustable mirror insulation unit 10. In a preferred embodiment, the total adjustment portion 20 is approximately 381 mm (15 inches) long and permits a total adjustment of 305 mm (12 inches), so that when the adjustable mirror insulation unit 10 is fully extended the first section 19 and the second section 21 overlap by about 76 mm (3 inches) to provide increased structural strength and reduced convective heat losses.

In conventional expandable or adjustable mirror insulation units, only the friction of abutting or joining sheets seals the unit against convective heat losses and provides structural support. In contrast, units embodying the present invention provide positive support for each overlapping layer in the form of a channel spacer having a longitudinal axis that is oriented in the direction of adjustment. A plurality of channel spacers is attached to one surface of each sheet in the adjustment portion 20 of the adjustable mirror insulation unit 10. Each channel spacer may assume any convenient shape, such as a U-shaped channel spacer, and I-beam shaped channel spacer, and so forth, as long as it provides a bearing surface that facilitates the sliding relationship among the reflective sheets 16, outer case 12 and inner case 14. Preferably, however, the channel spacers comprise channel V-spacers (V-shaped channel spacers) 30 that preferably include flanges 32 at the top of each leg of the V-shape to permit ready attachment of the channel V-spacer 30 to a reflective sheet 16 by means such as welding. Preferably, the flanges 32 run throughout the length of the channel V-spacers 30. As illustrated in Figure 10, which shows an adjustable mirror insulation unit embodying the invention which is in flat panel form but otherwise like the unit shown in Figures 1 and 2, the top surface of a bottom layer 34 includes four channel V-spacers 30 welded to it, and naturally, pointing upwardly. A layer 35 includes three channel V-spacers 30 welded to it, these spacers 30 pointing downwardly and fitting in between the four channel V-spacers 30 of the bottom layer 34. A third layer 36 lies flush against the second layer 35 in sliding relationship thereto. The third layer 36, like the first layer 34, has four channel V-spacers 30 welded to it and naturally pointing upwardly. A fourth layer 37 includes three channel V-spacers 30 welded to it, naturally pointing downwardly, which fit in between the channel V-spacers 30 of the third layer 36. This pattern is repeated throughout the adjustment portion 20. Naturally, any other similar pattern may be employed, the primary objectives being to provide bearing surfaces for permitting smooth movement of opposing layers relative to one another, to maintain firm mechanical support for layers in the adjustment portion 20, to maintain spaced parallel relationships in the adjustment portion 20 and to reduce convective heat losses between the reflective sheets 16.

The plan views of Figures 7 and 8 clearly illustrate the overlapping relationship of two reflective sheets 16 and the spaced mutually parallel relationships of channel V-spacers 30, that slide longitudinally relative to one another in a plurality of alternating male and female relationships. Figures 7 and 8 may represent either a single panel comprising two reflective sheets 16, or a stack of such panels. Figures 7 and 8 also may illustrate a flat insulating panel, a shape that has many applications. By bending such a flat panel, the pipe insulating embodiment of Figure 1 is created. Figure 9 illustrates the sliding relationship between the two reflective sheets 16 of Figures 7 and 8, and illustrates the arrangement of channel V-spacers 30 on those reflective sheets.

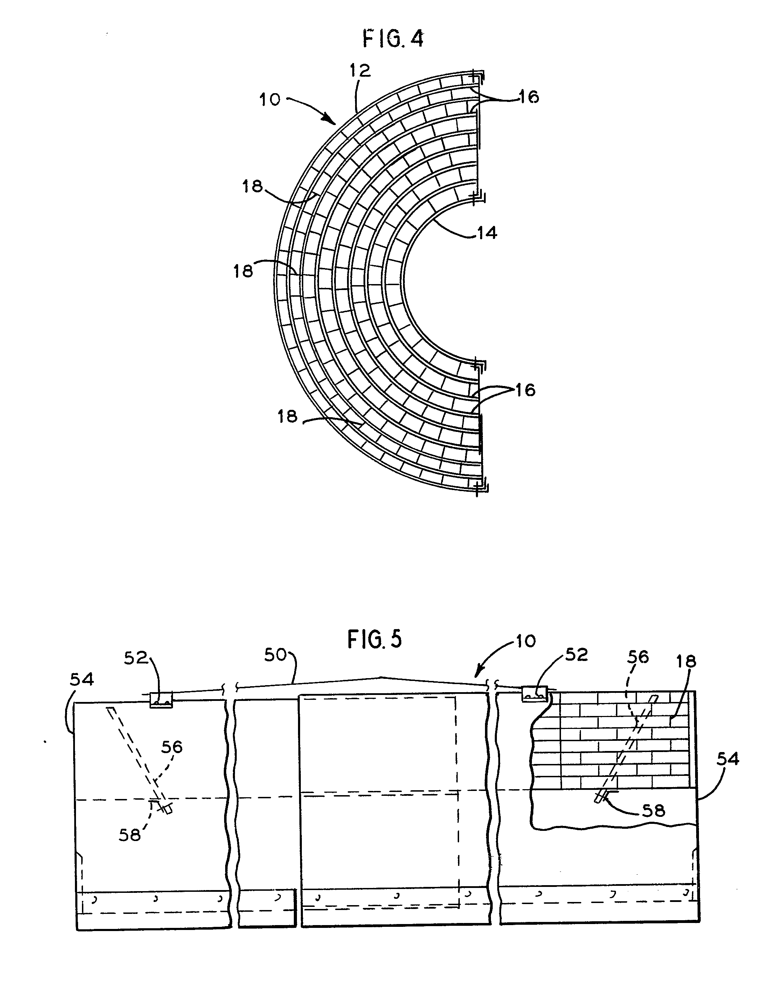

Figure 3 illustrates the inner relationships among channel V-spacers 30 in the pipe insulation unit shown in Figure 1. Figure 4 illustrates the conventional spacers used outside the adjustment portion 20 of the embodiment illustrated in Figure 1. When the adjustable mirror insulation unit 10 is adjusted, there is a possibility that the first section 19 and the second section 21 can be pulled apart. It may be extremely difficult or impossible to put these sections together if this happens. A number of approaches to preventing this are possible. Preferably, however, as shown in Figure 5, a strap 50 is attached to the outer case 12 at each end of the strap 50 by fasteners such as rivets 52 so that the strap 50 is slack when the adjustable mirror insulation unit 10 is compressed, but becomes taut when the adjustable mirror insulation unit 10 is expanded. A plurality of straps 50 may be deployed about the circumference of the adjustable mirror insulation unit 10. Ends 54 of the adjustable mirror insulation unit 10 are open, which can permit layers of insulation material to shift laterally relative to one another, thereby distorting the profile of the ends 54, either in response to thermal expansion and contraction or in response to adjustment during installation. This possibility can be eliminated by driving a plurality of liner rods 56 through the outer case 12, reflective sheets 16 and inner case 14, to which the liner rods 56 are fixedly attached by rivetting to a clip 58 which is welded to the inner case 14. The rod liners 56 have ground pointed ends so that they can easily be driven through the layers of insulation material.

Referring to Figure 6, each open end 54 of the adjustable mirror insulation unit 10 can be sealed with end cap 60 which includes a flange 62. The flange 62 is bent inwardly at a 90 degree angle throughout the circumference of the end cap 60 and fits snugly over the outside surface of the outer case 12, to which it may be welded. When the ends 54 do not form the end of a pipe run, they abut an adjacent adjustable mirror insulation unit 10. The resulting joints are fastened together by a circumferential band (not shown) which may be welded to each adjustable mirror insulation unit.

Although the invention has been described by way of example with regard to a multilayer adjustable mirror insulation unit, it is apparent that the invention is applicable to any constructional unit requiring adjustable multiple layers.

CLAIMS

1. A size-adjustable construction element including an adjustable section (20) comprising:

(a) a first panel member;

(b) a second panel member overlapping the first panel member;

(c) a first plurality of channel spacers (30) attached to the first panel member on one surface thereof;

(d) a second plurality of channel spacers (30) attached to the second panel member on a surface thereof that is opposed to the surface to which the first channel spacers are attached; and

(e) means for retaining the panel members in fixed relation to each other after adjusting the size of the element.

2. A construction element according to claim 1, wherein the channel spacers (30) comprise V-shaped channel spacers having a longitudinal axis oriented along the line of adjustment of the construction element.

3. A construction element according to claim 2, wherein each V-shaped channel member (30) includes a flange (32) at the top of each leg of the V-shape for easy attachment to each panel member.

4. A construction element according to claim 2 or claim 3, wherein each V-shaped channel member (30) has a length corresponding to the desired length of adjustment plus a retention length to provide support for the fully extended element.

5. A construction element according to any one of the preceding claims, wherein a plurality of corrugated foil strips (18) is attached to each panel member.

6. A construction element according to any one of the preceding claims, wherein the channel spacers (30) are staggered from one another in parallel rows so that every other row includes a first channel spacer, and each alternating row includes a second channel spacer.

7.   A size-adjustable multilayered panel comprising:

(a)   a first section (19) having a plurality of spaced parallel sheets (16);

(b)   a second section (21) having a plurality of spaced parallel sheets (16);

(c)   an adjustment section (20) wherein corresponding layers of the first section (19) and the second section (21) overlap, the adjustment section being adjustable in one direction; and

(d)   a plurality of channel spacers (30) attached to each sheet (16) to maintain parallel spaced relationship between the sheets and to provide a bearing surface for smooth adjustment of the panel, and aligned so that the channel spacers of each section (19, 21) fit between channel spacers of the other section.

8.   A panel according to claim 7, wherein the channel spacers (30) comprise V-shaped channel spacers having their longitudinal axes aligned along the direction of adjustment.

9.   A panel according to claim 7, wherein the channel spacers (30) comprises a U-shaped channel spacer having its longitudinal axis aligned along the direction of adjustment.

10.   A panel according to claim 7, claim 8 or claim 9, which is bent into a curved shape comprising a portion of a cylinder.

11.   A panel according to any one of claims 7 to 10, comprising an outer case (12) of thicker material than the sheets (16) to provide additional rigidity and to protect the sheets, the outer case (12) having the same overlapping structure and channel spacers as the sheets (16).

12.   A panel according to any one of claims 7 to 11, comprising an inner case (14) of thicker material than the sheets (16) to provide additional rigidity and to protect the sheets, the inner case (14) having the same overlapping structure and channel spacers as the sheets (16).

13.   A panel according to any one of claims 7 to 12, comprising means for retaining the sheets (16) in fixed spatial relationship to each other after adjustment of the panel size.

14.    A panel according to claim 13, wherein the retaining means comprises a plurality of spikes (56) driven through the sheets (16) and secured to a retainer clip (58).

15.    A panel according to any one of claims 7 to 14, wherein a plurality of corrugated foil strips (18) is attached to each sheet (16) to maintain the sheets in spaced parallel relationship.

FIG. 1

FIG. 2

19

20

14

21

16

16

12

FIG. 3

10

16

12

14

30

32

16

30

## FIG. 4

## FIG. 5

FIG.6

62  60

16
18

FIG.7

19  32  30  20  30  21

30

32

18  16  30  32  30  16  18

FIG.8

FIG. 9

FIG.10

**European Patent Office**

**EUROPEAN SEARCH REPORT**

. Application number

| Category | Citation of document with indication, where appropriate, of relevant passages | Relevant to claim | CLASSIFICATION OF THE APPLICATION (Int. Cl.4) |
|---|---|---|---|
| D,A | US - A - 3 904 379 (OSER)<br>* Totality *<br>-- | 1,7 | F 16 L 59/08<br>G 21 C 11/08 |
| D,A | US - A - 4 054 158 (HOEMAN)<br>* Totality *<br>-- | 1,7 | |
| A | DE - A1 - 2 734 348 (KRAFTWERK UNION AG)<br>* Totality *<br>-- | 1,7 | |
| A | US - A - 3 958 714 (BARRIERE)<br>* Totality *<br>---- | 1,7 | |

## DOCUMENTS CONSIDERED TO BE RELEVANT

EP 85301596.4

**TECHNICAL FIELDS SEARCHED (Int. Cl.4)**

F 16 L 59/00
G 21 C 11/00

The present search report has been drawn up for all claims

| Place of search | Date of completion of the search | Examiner |
|---|---|---|
| VIENNA | 22-05-1985 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82